(19) Europäisches Patentamt
European Patent Office
Office européen des brevets

(11) **EP 2 833 438 A1**

(12) **EUROPEAN PATENT APPLICATION**
published in accordance with Art. 153(4) EPC

(43) Date of publication:
**04.02.2015 Bulletin 2015/06**

(21) Application number: **13767967.6**

(22) Date of filing: **18.03.2013**

(51) Int Cl.:
**H01M 2/16** $^{(2006.01)}$ **B32B 27/32** $^{(2006.01)}$
**B32B 27/34** $^{(2006.01)}$

(86) International application number:
**PCT/JP2013/057610**

(87) International publication number:
**WO 2013/146402 (03.10.2013 Gazette 2013/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.03.2012 JP 2012078162**

(71) Applicant: **Toray Battery Separator Film Co., Ltd. Tochigi 329-2763 (JP)**

(72) Inventors:
• **MIZUNO, Naoki**
  **Nasushiobara-shi**
  **Tochigi 329-2763 (JP)**

• **IRIE, Michihiko**
  **Nasushiobara-shi**
  **Tochigi 329-2763 (JP)**
• **SHIMIZU, Ken**
  **Nasushiobara-shi**
  **Tochigi 329-2763 (JP)**

(74) Representative: **Webster, Jeremy Mark et al Mewburn Ellis LLP**
  **33 Gutter Lane**
  **London**
  **EC2V 8AS (GB)**

(54) **BATTERY SEPARATOR AND METHOD FOR PRODUCING SAME**

(57)     Provided is a battery separator comprising a porous membrane A and a porous membrane B laminated on the porous membrane A, the porous membrane A comprising a polyolefin resin, the porous membrane B comprising a polyamide-imide resin and inorganic particles or cross-linked polymer particles, wherein the particles are contained in an amount of 80% by weight to 97% by weight of the porous membrane B and have an average diameter that is not less than 1.5 times and less than 50 times the average pore size of the porous membrane A, and a specific Inequality 1 and a specific Inequality 2 are satisfied.

Provided is a battery separator having excellent heat resistance and processability (electrolyte permeability, low curling property) and being characterized in that the air resistance increase due to lamination of a heat resistant resin is extremely small.

EP 2 833 438 A1

**Description**

TECHNICAL FIELD

The present invention relates to a battery separator comprising a porous membrane comprising a polyolefin resin, and a porous membrane laminated thereon comprising a polyamide-imide resin and inorganic particles or cross-linked polymer particles. The present invention also relates to a battery separator having excellent heat resistance, processability (electrolyte permeability, low curling property) in a battery assembly process, and ion permeability and being useful as a separator for lithium ion secondary batteries, and a method of producing the same.

BACKGROUND ART

Thermoplastic resin porous membranes are widely used, for example, as materials for separation, selective permeation, and isolation of substances: e.g., battery separators used in lithium ion secondary batteries, nickel-hydrogen batteries, nickel-cadmium batteries, and polymer batteries; separators for electric double layer capacitors; various filters such as reverse osmosis filtration membranes, ultrafiltration membranes, and microfiltration membranes; moisture-permeable waterproof clothing; and medical materials. In particular, polyethylene porous membranes are suitably used as separators for lithium ion secondary batteries, because they are not only characterized by having an excellent electrical insulation property, having ion permeability due to electrolyte impregnation, and having excellent electrolyte resistance and oxidation resistance, but also have the pore-blocking effect of blocking a current at a temperature of about 120 to 150°C in abnormal temperature rise in a battery to suppress excessive temperature rise. However, if the temperature continues to rise for some reason even after pore blocking, membrane rupture can occur at a certain temperature as a result of decrease in viscosity of molten polyethylene constituting the membrane and shrinkage of the membrane. In addition, if the membrane is left at a constant high temperature, membrane rupture can occur after the lapse of a certain time as a result of decrease in viscosity of molten polyethylene and shrinkage of the membrane. This phenomenon is not a phenomenon that occurs only when polyethylene is used, and also when any other thermoplastic resin is used, this phenomenon is unavoidable at or higher than the melting point of the resin constituting the porous membrane.
As properties closely related particularly to separators, excellent mechanical properties, heat resistance, permeability, dimensional stability, pore-blocking property (shutdown property), melt rupture property (meltdown property), and the like are required. Further, lithium ion secondary batteries, upon demand for cost reduction in recent years, are strongly required to be produced more efficiently. Therefore, it is expected that separators for lithium ion secondary batteries will, in the future, increasingly require higher processability (electrolyte permeability, low curling property) in a battery assembly process.
In particular, any improvement in electrolyte permeability contributes significantly to battery productivity, which is of extremely great value.
In recent years, techniques using lamination of a heat resistant resin layer on a polyolefin separator membrane have been proposed. Lamination of a heat resistant resin having high affinity for electrolyte solutions improves electrolyte permeability to some degree.
Coating a polyolefin porous membrane with a coating solution containing a heat resistant resin and immersing a polyolefin porous membrane in a coating solution containing a heat resistant resin are common methods for laminating the heat resistant resin layer as described above on a polyolefin porous membrane. However, these methods have a problem of air resistance increase due to clogging of pores of the polyolefin porous membrane caused by lamination of the heat resistant resin. If a polyolefin porous membrane with a larger pore size is used in order to reduce the clogging of pores, an important pore-blocking function, which determines the safety of a separator, will be reduced.
To satisfy these requirements, various studies to improve heat resistance have hitherto been conducted.
As described above, among battery separators comprising a substrate porous membrane based on polyolefin or the like and a heat resistant resin layer laminated thereon, those which are satisfactory in both the rate of air resistance increase due to lamination of a heat resistant resin layer on a substrate polyolefin porous membrane and processability such as electrolyte permeability and low curling property are not present in the prior art.

PRIOR ART DOCUMENTS

PATENT DOCUMENTS

For example, Patent Document 1 discloses a separator for lithium ion secondary batteries, the separator being obtained by laminating a heat-resistant nitrogen-containing aromatic polymer comprising ceramic powder on a polyolefin porous membrane.
Patent Document 2 and Patent Document 3 disclose a battery separator obtained by laminating a heat-resistant layer comprising inorganic particles and polyamide-imide on a polyolefin porous membrane.

Patent Document 4 discloses a battery separator obtained by immersing a polyolefin porous membrane in a dope composed mainly of polyvinylidene fluoride which is a heat resistant resin and inorganic particles.

Patent Document 5 discloses a battery separator obtained by immersing a polyolefin porous membrane in a dope composed mainly of carboxyl methylcellulose and inorganic particles.

Patent Document 1: Japanese Patent No. 3175730
Patent Document 2: WO 2009/041395
Patent Document 3: WO 2009/041394
Patent Document 4: JP 2008-524824 W
Patent Document 5: JP 2008-503049 W

SUMMARY OF THE INVENTION

PROBLEMS TO BE SOLVED BY THE INVENTION

The separator of Patent Document 1 had a significantly increased air resistance as compared to the case using a polyolefin porous membrane alone because the ceramic powder and the heat-resistant nitrogen-containing aromatic polymer entered pores of the substrate polyethylene porous membrane and caused adhesion. In addition, the electrolyte permeability was not satisfactory.

The separators of Patent Document 2 and Patent Document 3 had an increased air resistance, as compared to the case of a polyolefin porous membrane alone, and an unsatisfactory curling property.

The separator of Patent Document 4 had an increased air resistance, as compared to the case of a polyolefin porous membrane alone, and unsatisfactory electrolyte permeability. In addition, the important pore-blocking function, which determines the safety of the separator, was poor.

The separator of Patent Document 5 was unsatisfactory in both adhesion of a coating layer and electrolyte permeability.

The present invention has excellent heat resistance and processability in a battery assembly process, and has achieved the reduced rate of air resistance increase and improved electrolyte permeability, which are properties difficult to achieve simultaneously in the prior art, by infiltrating a polyamide-imide resin, which is a heat resistant resin, in trace amounts deep into pores of a polyolefin porous membrane.

"Infiltrated in trace amounts" as used herein means that the absorbance of an absorption having a peak at or near 1,720 cm$^{-1}$ attributed to the polyamide-imide resin (absT$_{(1720)}$), as measured by infrared spectroscopy (transmission method) after peeling a polyamide-imide resin layer (porous membrane B) off a polyolefin porous membrane (porous membrane A), is in the range of 0.005 to 0.030 per 10 $\mu$m thickness of the porous membrane A.

"Deep into pores" as used herein means that the absorbance of an absorption having a peak at or near 1,720 cm$^{-1}$ attributed to the polyamide-imide resin (absR$_{(1720)}$), as measured by infrared spectroscopy (reflection method) on the polyolefin porous membrane surface (the surface opposite to the porous membrane B), is in the range of 0.001 to 0.005.

MEANS FOR SOLVING THE PROBLEMS

To solve the problems described above, the battery separator of the present invention has the following constitution:

A battery separator comprising:

a porous membrane A; and
a porous membrane B laminated on the porous membrane A, the porous membrane A comprising a polyolefin resin, the porous membrane B comprising a polyamide-imide resin and inorganic particles or cross-linked polymer particles, wherein the particles are contained in an amount of 80% by weight to 97% by weight of the porous membrane B and have an average diameter that is not less than 1.5 times and less than 50 times the average pore size of the porous membrane A, and Inequality 1 and Inequality 2 are satisfied.

$$0.005 \leq \text{absT}_{(1720)} \leq 0.030 \qquad \text{Inequality 1}$$

$\text{absT}_{(1720)}$: Absorbance of an absorption having a peak at or near 1,720 cm$^{-1}$ per 10 $\mu$m thickness of the porous membrane A, as measured by infrared spectroscopy (transmission method) after peeling the porous membrane B off the porous membrane A; and

$$0.001 \leq \text{absR}_{(1720)} \leq 0.005 \qquad \text{Inequality 2}$$

$\text{absR}_{(1720)}$: Absorbance of a maximum peak at or near 1,720 cm$^{-1}$, as measured by infrared spectroscopy (reflection method) on the surface of the porous membrane A that is opposite to the porous membrane B

The method of producing the battery separator of the present invention has the following constitution:

A method of producing the battery separator described above, comprising the following steps (i) and (ii).

Step (i): Applying a coating solution (varnish) to the porous membrane A comprising a polyolefin resin, the coating solution comprising a polyamide-imide resin and inorganic particles or cross-linked polymer particles, wherein the concentration of the polyamide-imide resin in solution components is 1% by weight to 3.5% by weight, and then passing the coated porous membrane A through a humidity-controlled zone at an absolute humidity of 5 g/m$^3$ or more but less than 10 g/m$^3$ for 3 seconds or more but less than 30 seconds to form a membrane comprising the polyamide-imide resin on the porous membrane A.

Step (ii): Immersing a composite membrane obtained in the step (i), in which the membrane comprising the polyamide-imide resin is laminated, in a coagulation bath to convert the membrane comprising the polyamide-imide resin into a porous membrane B, followed by washing and drying, to obtain a battery separator.

In the battery separator of the present invention, the inorganic particles are preferably at least one selected from silica, titanium dioxide, and alumina.

In the battery separator of the present invention, the cross-linked polymer particles are preferably at least one selected from cross-linked polystyrene particles, cross-linked acrylic resin particles, and cross-linked methyl methacrylate particles.

EFFECTS OF THE INVENTION

The battery separator of the present invention, in which a resin component composed mainly of a polyamide-imide resin is present in trace amounts deep in pores of a polyolefin porous membrane A, not only has excellent heat resistance and processability (low curling property), but also is characterized in that the rate of air resistance increase due to lamination of a heat resistant resin is extremely low and that it has excellent electrolyte permeability; therefore, it can be suitably used as a separator for lithium ion secondary batteries.

BEST MODE FOR CARRYING OUT THE INVENTION

The battery separator of the present invention comprises a porous membrane A and a porous membrane B laminated thereon, the porous membrane A comprising a polyolefin resin, the porous membrane B comprising a polyamide-imide resin and inorganic particles or cross-linked polymer particles. The present invention provides, through the use of a specific varnish and a highly-controlled coating technique mentioned below, a battery separator in which electrolyte permeates at a high speed because the polyamide-imide resin enters deep into pores of the porous membrane A comprising a polyolefin resin, but the rate of air resistance increase due to lamination of the polyamide-imide resin is extremely small because the polyamide-imide resin enters into the pores of the porous membrane A in trace amounts.

First, the porous membrane A for use in the present invention will be described.

The resin that constitutes the porous membrane A is a polyolefin resin and may be a single substance, a mixture of two or more different polyolefin resins, for example, a mixture of polyethylene and polypropylene, or a copolymer of different olefins. In particular, polyethylene and polypropylene are preferred. This is because polyethylene and polypropylene have, in addition to basic properties such as electrical insulating property and ion permeability, the pore-blocking effect of blocking a current in abnormal temperature rise of a battery to suppress excessive temperature rise.

The mass average molecular weight (Mw) of the polyolefin resin is not critical, but typically $1 \times 10^4$ to $1 \times 10^7$,

preferably $1 \times 10^4$ to $15 \times 10^6$, and more preferably $1 \times 10^5$ to $5 \times 10^6$.

The polyolefin resin preferably comprises polyethylene. Examples of polyethylenes include ultra high molecular weight polyethylene, high density polyethylene, medium density polyethylene, and low density polyethylene. Further, examples of polymerization catalysts include, but are not limited to, Ziegler-Natta catalysts, Phillips catalysts, and metallocene catalysts. These polyethylenes may be not only a homopolymer of ethylene but also a copolymer containing a small amount of any other $\alpha$-olefin. Examples of suitable $\alpha$-olefins other than ethylene include propylene, 1-butene, 1-pentene, 1-hexene, 4-methyl-1-pentene, 1-octene, (meth) acrylic acid, esters of (meth) acrylic acid, and styrene.

The polyethylene may be a single substance, but is preferably a polyethylene mixture of two or more polyethylenes. As the polyethylene mixture, a mixture of two or more ultra high molecular weight polyethylenes having different Mws, or a mixture of high density polyethylenes, medium density polyethylenes, and low density polyethylenes, each having different Mws, may be used, or a mixture of two or more polyethylenes selected from the group consisting of ultra high molecular weight polyethylene, high density polyethylene, medium density polyethylene, and low density polyethylene may be used.

In particular, a preferred polyethylene mixture is a mixture of ultra high molecular weight polyethylene with a Mw of $5 \times 10^5$ or more and polyethylene with a Mw of $1 \times 10^4$ or more but less than $5 \times 10^5$. The Mw of the ultra high molecular weight polyethylene is preferably $5 \times 10^5$ to $1 \times 10^7$, more preferably $1 \times 10^6$ to $15 \times 10^6$, and particularly preferably $1 \times 10^6$ to $5 \times 10^6$. As the polyethylene with a Mw of $1 \times 10^4$ or more but less than $5 \times 10^5$, any of high density polyethylene, medium density polyethylene, and low density polyethylene can be used, and in particular, it is preferable to use high density polyethylene. As the polyethylene with a Mw of $1 \times 10^4$ or more but less than $5 \times 10^5$, two or more polyethylenes having different Mws may be used, or two or more polyethylenes having different densities may be used. When the upper limit of the Mw of the polyethylene mixture is not more than $15 \times 10^6$, melt extrusion can be easily carried out. The content of high molecular weight polyethylene in the polyethylene mixture is preferably 1% by weight or more, and preferably 10 to 80% by weight.

The ratio of Mw to number average molecular weight (Mn), or molecular weight distribution (Mw/Mn), of the polyolefin resin is not critical, but preferably in the range of 5 to 300, more preferably 10 to 100. When the Mw/Mn is in this preferred range, a polyolefin solution is easily extruded, and, in addition, the resulting microporous membrane is provided with high strength. Mw/Mn is used as an index of molecular weight distribution; namely, in the case of a polyolefin composed of a single substance, a larger value means a wider molecular weight distribution. The Mw/Mn of the polyolefin composed of a single substance can be adjusted as appropriate by means of multistage polymerization of the polyolefin. The Mw/Mn of a mixture of polyolefins can be adjusted as appropriate by adjusting the molecular weight and mixing ratio of components.

The phase structure of the porous membrane A varies depending on the production method. As long as the various features described above are satisfied, a phase structure for the intended purpose can be provided unrestrictedly depending on the production method. Examples of the method of producing the porous membrane include foaming process, phase separation method, dissolution and recrystallization method, stretching pore-forming process, and powder sintering process, among which the phase separation method is preferred in terms of uniform micropores and cost.

Examples of the production method according to the phase separation method include a method comprising melt-blending, for example, polyolefin with a membrane-forming solvent, extruding the resulting molten mixture through a die, cooling the extrudate to form a gel-like product, stretching the gel-like product obtained in at least one direction, and removing the membrane-forming solvent to obtain a porous membrane.

The porous membrane A may be a monolayer membrane or a multilayer membrane comprising two or more layers which are different, for example, in pore size and thermal properties. A multilayer membrane comprising two or more layers can be produced either by a method comprising melt-blending each of the polyolefins constituting, for example, A layer and B layer with a solvent for film formation, feeding the resulting molten mixtures from each extruder to one die to integrate gel sheets constituting each component, and co-extruding the integrated gel sheets, or by a method comprising laminating gel sheets constituting each layer and heat-fusing the laminate. The co-extrusion method is preferred because a high interlayer adhesive strength is easily achieved; high permeability is easily maintained because continuous pores are easily formed between layers; and productivity is high.

The porous membrane A needs to have a function of blocking pores in the case of abnormal charge and discharge reaction. Accordingly, the melting point (softening point) of the constituent resin is preferably 70 to 150°C, more preferably 80 to 140°C, and most preferably 100 to 130°C. When the melting point (softening point) of the constituent resin is in this preferred range, the pore-blocking function will not be activated in normal use, which allows a battery to be used, while the pore-blocking function is immediately activated if an abnormal reaction proceeds, which ensures sufficient safety.

The thickness of the porous membrane A is preferably 5 $\mu$m or more but less than 50 $\mu$m. The upper limit of the thickness is more preferably 40 $\mu$m, and most preferably 30 $\mu$m. The lower limit of the thickness is more preferably 10 $\mu$m, and most preferably 15 $\mu$m. When the thickness of the porous membrane A is in this preferred range, a membrane strength and pore-blocking function of practical use can be provided, and, in addition, the electrode area per unit volume of a battery case will not be restricted, which is suitable for the increase in battery capacity.

The upper limit of the air resistance (JIS P 8117) of the porous membrane A is preferably 500 sec/100 cc Air, more preferably 400 sec/100 cc Air, and most preferably 300 sec/100 cc Air. The lower limit of the air resistance is preferably 50 sec/100 cc Air, more preferably 70 sec/100 cc Air, and most preferably 100 sec/100 cc Air. When the air resistance of the porous membrane A is in this preferred range, a battery is provided with sufficient charge and discharge properties, in particular, sufficient ion permeability (charge and discharge operating voltage) and lifetime (closely related to the amount of electrolytic solution retained), and, in addition, a sufficient mechanical strength and insulation property are provided, which eliminates the possibility of a short circuit during charge and discharge.

The upper limit of the porosity of the porous membrane A is preferably 70%, more preferably 60%, and most preferably 55%. The lower limit of the porosity is preferably 30%, more preferably 35%, and most preferably 40%. When the porosity of the porous membrane A is in this preferred range, a battery is provided with sufficient charge and discharge properties, in particular, sufficient ion permeability (charge and discharge operating voltage) and lifetime (closely related to the amount of electrolytic solution retained), and, in addition, a sufficient mechanical strength and insulation property are provided, which eliminates the possibility of a short circuit during charge and discharge.

The average pore size of the porous membrane A is preferably 0.01 to 0.5 $\mu$m, more preferably 0.1 to 0.3 $\mu$m, because it has a great influence on the pore-blocking speed. When the average pore size of the porous membrane A is in this preferred range, the polyamide-imide resin readily enters deep into the pores of the porous membrane A. Consequently, sufficient electrolyte permeability is provided, and the air resistance will not decrease upon lamination; in addition, a pore-blocking phenomenon responds to temperature quickly enough, and a pore-blocking temperature that depends on the temperature rise rate will not shift to higher temperatures.

Next, the porous membrane B for use in the present invention will be described.

The porous membrane B comprises a polyamide-imide resin and inorganic particles or cross-linked polymer particles. The porous membrane B serves to support and reinforce the porous membrane A with its heat resistance. Thus, the glass transition temperature of the polyamide-imide resin is preferably 150°C or higher, more preferably 180°C or higher, and most preferably 210°C or higher. The upper limit is not particularly limited. When the polyamide-imide resin has a glass transition temperature higher than its decomposition temperature, it is preferred that the decomposition temperature be in the above range. When the glass transition temperature of the polyamide-imide resin constituting the porous membrane B is in this preferred range, a sufficient thermal-rupture-resistant temperature can be achieved, and high safety can be ensured.

The reason for using a polyamide-imide resin is that it has a surface energy larger than those of commonly-used electrolyte solutions (e.g., polycarbonate electrolyte solution) and has excellent wettability. The surface energy of the polyamide-imide resin is 35 mN/m or more, preferably 40 mN/m or more.

The resin may be used alone or in combination with any other material. Also when the resin is combined with any other resin, the surface energy is preferably 35 mN/m or more.

The polyamide-imide resin for use in the present invention will now be described.

In general, a polyamide-imide resin is synthesized by a common method such as the acid chloride method using trimellitic acid chloride and diamine or the diisocyanate method using trimellitic acid anhydride and diisocyanate, and the diisocyanate method is preferred in terms of production cost.

Examples of the acid component for use in the synthesis of the polyamide-imide resin include trimellitic acid anhydride (chloride), a portion of which can be replaced with any other polybasic acid or anhydride thereof. Examples thereof include tetracarboxylic acids such as pyromellitic acid, biphenyltetracarboxylic acid, biphenylsulfonetetracarboxylic acid, benzophenonetetracarboxylic acid, biphenyl ether tetracarboxylic acid, ethylene glycol bistrimellitate, and propylene glycol bistrimellitate, and anhydrides thereof; aliphatic dicarboxylic acids such as oxalic acid, adipic acid, malonic acid, sebacic acid, azelaic acid, dodecane dicarboxylic acid, dicarboxypolybutadiene, dicarboxypoly(acrylonitrile-butadiene), and dicarboxypoly(styrene-butadiene); alicyclic dicarboxylic acids such as 1,4-cyclohexanedicarboxylic acid, 1,3-cyclohexanedicarboxylic acid, 4,4'-dicyclohexylmethanedicarboxylic acid, and dimer acid; and aromatic dicarboxylic acids such as terephthalic acid, isophthalic acid, diphenylsulfonedicarboxylic acid, diphenyl ether dicarboxylic acid, and naphthalenedicarboxylic acid. Among them, 1,3-cyclohexanedicarboxylic acid and 1,4-cyclohexanedicarboxylic acid are preferred in terms of electrolyte resistance. In terms of shutdown property, dimer acid, and dicarboxypolybutadiene, dicarboxypoly(acrylonitrilebutadiene), and dicarboxypoly(styrene-butadiene) with a molecular weight of 1,000 or more are preferred.

Also, a portion of a trimellitic acid compound can be replaced with a glycol to introduce a urethane group into a molecule. Examples of glycols include alkylene glycols such as ethylene glycol, propylene glycol, tetramethylene glycol, neopentyl glycol, and hexanediol; polyalkylene glycols such as polyethylene glycol, polypropylene glycol, and polytetramethylene glycol; and polyesters with terminal hydroxyl groups synthesized from one or more of the dicarboxylic acids described above and one or more of the glycols described above, among which polyethylene glycol and polyesters with terminal hydroxyl groups are preferred in terms of a shutdown effect. The number average molecular weight of them is preferably 500 or more, more preferably 1,000 or more. The upper limit is not limited, but preferably less than 8,000.

When a portion of the acid component is replaced with at least one from the group consisting of dimer acid, polyalkylene ether, polyester, and butadiene rubber containing any one of a carboxyl group, a hydroxyl group, and an amino group at its terminal, it is preferable to replace 1 to 60 mol% of the acid component.

Examples of the diamine (diisocyanate) component used in the synthesis of the polyamide-imide resin include aliphatic diamines such as ethylenediamine, propylenediamine, and hexamethylenediamine, and diisocyanates thereof; alicyclic diamines such as 1,4-cyclohexanediamine, 1,3-cyclohexanediamine, and dicyclohexylmethanediamine, and diisocyanates thereof; and aromatic diamines such as o-tolidine, tolylenediamine, *m*-phenylenediamine, *p*-phenylenediamine, 4,4'-diaminodiphenylmethane, 4,4'-diaminodiphenyl ether, 4,4'-diaminodiphenylsulfone, benzidine, xylylenediamine, and naphthalenediamine, and diisocyanates thereof, among which dicyclohexylmethanediamine and a diisocyanate thereof are most preferred in terms of reactivity, cost, and electrolyte resistance, and 4,4'-diaminodiphenylmethane, naphthalenediamine, and diisocyanates thereof are preferred. In particular, o-tolidine diisocyanate (TODI), 2,4-tolylene diisocyanate (TDI), and a blend thereof are preferred. In order particularly to improve adhesion of the porous membrane B, o-tolidine diisocyanate (TODI) which has high stiffness accounts for preferably 50 mol% or more, more preferably 60 mol% or more, and still more preferably 70 mol% or more of total isocyanates.

The polyamide-imide resin can be readily prepared by stirring in a polar solvent such as *N,N'*-dimethylformamide, *N,N'*-dimethylacetamide, *N*-methyl-2-pyrrolidone, or γ-butyrolactone with heating at 60 to 200°C. In this case, an amine such as triethylamine or diethylenetriamine; an alkali metal salt such as sodium fluoride, potassium fluoride, cesium fluoride, or sodium methoxide; or the like can also be used as a catalyst as required.

The logarithmic viscosity of the polyamide-imide resin is preferably 0.5 dL/g or more. The lower limit of the logarithmic viscosity is preferably not more than 1.8 dL/g. When the logarithmic viscosity of the polyamide-imide resin is in this preferred range, a sufficient meltdown property is provided, and a sufficient anchoring effect and excellent adhesion are provided because the porous membrane is not brittle; at the same time, the resin easily enters deep into the pores of the polyolefin porous membrane A, and $absR_{(1720)}$ cannot be too small.

The solvent that can be used to dissolve the polyamide-imide resin to obtain a varnish may be any solvent if it can dissolve the resin and has an affinity for the polyolefin porous membrane A, and examples thereof include *N,N*-dimethylacetamide (DMAc), *N*-methyl-2-pyrrolidone (NMP), hexamethylphosphoric triamide (HMPA), *N,N*-dimethylformamide (DMF), dimethyl sulfoxide (DMSO), γ-butyrolactone, chloroform, tetrachloroethane, dichloroethane, 3-chloronaphthalene, parachlorophenol, tetralin, acetone, and acetonitrile. These solvents may be used alone or in combination.

For the resin concentration in solution components, excluding the particle component in the varnish, the upper limit is preferably 3.5% by weight, more preferably 3.0% by weight, and the lower limit is preferably 1.0% by weight, more preferably 1.5% by weight. When the resin concentration in solution components is in this preferred range, $absR_{(1720)}$ cannot be too small, whereby sufficient adhesion is provided, and it is easy to perform coating because the amount of the varnish to be applied is appropriate. At the same time, $absT_{(1720)}$ and $absR_{(1720)}$ cannot be too large, whereby the amount of the polyamide-imide resin that penetrates into the pores of the porous membrane A is appropriate, and the rate of air resistance increase of the separator cannot be high.

In the present invention, to reduce curling, it is important that inorganic particles or cross-linked polymer particles be present in the porous membrane B. Further, the presence of inorganic particles or cross-linked polymer particles in the porous membrane B produces effects of preventing internal short circuit due to the growth of dendritic dendritic crystals on an electrode inside a battery (dendrite-preventing effect), reducing the heat shrinkage rate, providing slip characteristics, and the like. For the presence of inorganic particles or cross-linked polymer particles in the porous membrane B, inorganic particles or cross-linked polymer particles may be added to the varnish. The upper limit of the amount of the particles is preferably 97% by weight, more preferably 95% by weight. The lower limit is preferably 80% by weight, more preferably 85% by weight. When the amount of the particles added is in this preferred range, a sufficient curling-reducing effect is produced; at the same time, the percentage of the polyamide-imide resin relative to the total volume of the porous membrane B is appropriate, and the resin sufficiently enters deep into the pores of the porous membrane A, resulting in sufficient adhesion of the porous membrane B.

Examples of inorganic particles include calcium carbonate, calcium phosphate, silica, crystalline glass filler, kaolin, talc, titanium dioxide, alumina, silica-alumina composite oxide particles, barium sulfate, calcium fluoride, lithium fluoride, zeolite, molybdenum sulfide, and mica. Alumina, titanium dioxide, and silica are suitable in terms of availability and cost.

Examples of cross-linked polymer particles include cross-linked polystyrene particles, cross-linked acrylic resin particles, and cross-linked methyl methacrylate particles. The upper limit of the average diameter of these particles is 25 μm, preferably 5 μm, and more preferably 1 μm. The lower limit is 0.02 μm, preferably 0.10 μm, and more preferably 0.3 μm.

The relationship between the average pore size of the porous membrane A and the average diameter of these particles is as follows: the average diameter of the particles is 1.5 times to 50 times the average pore size of the polyolefin porous membrane A, preferably 1.8 times to 20 times, and more preferably 2.0 times to 5 times.

When the average diameter of the particles is in this preferred range, the polyamide-imide resin and the particles cannot block the pores of the polyolefin porous membrane A in a mixed state, and a significant increase in air resistance can be prevented; at the same time, the particles are unlikely to fall off during a battery assembly process, and serious defects in a battery can be prevented effectively.

When the polyamide-imide resin is made porous by phase separation in forming a porous membrane B, a phase separation aid may be used to accelerate the processing speed. In the present invention, the amount of the phase separation aid used is preferably less than 12% by mass, more preferably 6% by mass or less, and still more preferably 5% by mass or less, based on the solvent components of the varnish. By adding a phase separation aid in an amount in such a preferred range, the effect of reducing the air resistance increase of a battery separator due to lamination of the porous membrane B is produced; at the same time, the polyamide-imide resin can be easily present deep in the pores of the porous membrane A, and $absR_{(1720)}$ cannot be too small.

The thickness of the porous membrane B is preferably 1 to 5 $\mu$m, more preferably 1 to 4 $\mu$m, and most preferably 1 to 3 $\mu$m. When the thickness of the porous membrane B is in this preferred range, the membrane strength and insulation property can be ensured when the porous membrane A melts and shrinks at or higher than its melting point, and at the same time, curling is unlikely to increase, which facilitates handling in downstream processes.

The porosity of the porous membrane B is preferably 30 to 90%, more preferably 40 to 70%. When the porosity of the porous membrane B is in this preferred range, the electrical resistance of the membrane cannot be too high, which makes it easy to apply a high current, and in addition, the membrane strength is sufficiently high. The air resistance of the porous membrane B, as measured by a method in accordance with JIS P 8117, is preferably 1 to 600 sec/100 cc Air, more preferably 50 to 500 sec/100 cc Air, and still more preferably 100 to 400 sec/100 cc Air. When the air resistance of the porous membrane B is in this preferred range, high membrane strength is provided, and at the same time, satisfactory cycle characteristics are provided.

The air resistance of the battery separator of the present invention is preferably 50 to 800 sec/100 cc Air, more preferably 100 to 500 sec/100 cc Air, and most preferably 100 to 400 sec/100 cc Air. When the air resistance of the battery separator is in this preferred range, a sufficient insulation property is provided, and clogging of foreign substances, short circuit, and membrane rupture cannot occur; at the same time, the membrane resistance is not too high, and charge and discharge properties and lifetime properties in a practical range are provided.

Next, the method of producing the battery separator of the present invention will be described.

The process for producing the battery separator of the present invention comprises the steps of (i) and (ii).

Step (i): Applying a varnish to the porous membrane A comprising a polyolefin resin, the varnish comprising a polyamide-imide resin and inorganic particles, wherein the polyamide-imide resin concentration in solution components excluding the particle component is 1% by weight to 3.5% by weight, and then passing the coated porous membrane A through a humidity-controlled zone at an absolute humidity of 5 g/m³ or more but less than 10 g/m³ for 3 seconds or more but less than 30 seconds to form a polyamide-imide resin membrane on the porous membrane A.

Step (ii): Immersing a composite membrane obtained in the step (i), in which the polyamide-imide resin membrane is laminated, in a coagulation bath to convert the polyamide-imide resin membrane into a porous membrane B, followed by washing and drying, to obtain a battery separator.

A description will be given in more detail.

The porous membrane B is obtained by laminating a varnish composed mainly of a polyamide-imide resin solution and particles, the polyamide-imide resin solution being obtained by dissolution in a solvent that is able to dissolve a polyamide-imide resin and miscible with water, on the porous membrane A comprising a given polyolefin resin using a coating method, placing the laminate in a certain humidity environment to cause phase separation between the polyamide-imide resin and the solvent miscible with water, and placing the laminate into a water bath (coagulation bath) to coagulate the polyamide-imide resin.

Provided that $absT_{(1720)}$ and $absR_{(1720)}$ are in a given range, the porous membrane B may also be laminated by a method (transcription method) comprising coating a substrate film (e.g., polypropylene film or polyester film) once, placing the coated substrate film in a certain humidity environment to cause phase separation between the polyamide-imide resin component and the solvent component, thereby forming the porous membrane B, and then transcribing the porous membrane B onto the porous membrane A to achieve lamination. This method, however, is practically difficult.

Examples of the method of applying the varnish include reverse roll coating, gravure coating, kiss coating, roll brushing, spray coating, air knife coating, meyer bar coating, pipe doctor method, blade coating, and die coating, and these methods can be used alone or in combination.

In the present invention, it is preferred that, between the coating and placing into a coagulation bath, the coated porous membrane A be passed through a zone in a certain humidity environment (hereinafter referred to as a humidity-controlled zone) for 3 seconds or more. When the time of passage through the humidity-controlled zone is in this preferred range, a significant increase in air resistance can be prevented. Although the upper limit of the time for passage is not particularly restricted, 30 seconds are enough. During this time period, the polyamide-imide resin and the solvent undergo phase separation. The humidity-controlled zone is a zone where the upper limit of absolute humidity is controlled at 10 g/m³, preferably 9.5 g/m³, and more preferably 9.0 g/m³, and the lower limit at 5 g/m³, preferably 6 g/m³, and more preferably 7.0 g/m$^3$. When the absolute humidity in the humidity-controlled zone is in this preferred range, the polyamide-imide resin does not absorb moisture and gelation does not proceed, and therefore, the polyamide-imide resin is able to penetrate deep into the pores of the porous membrane A, whereby absR$_{(1720)}$ cannot be too small; at the same time, the phase separation between the polyamide-imide resin and the solvent proceed sufficiently, and a significant increase in air resistance can be prevented.

In the coagulation bath, the polyamide-imide resin component coagulates into three-dimensional network. The immersion time in the coagulation bath is preferably 3 seconds or more. When the immersion time in the coagulation bath is in this preferred range, the resin component coagulates sufficiently. Although the upper limit of the immersion time is not restricted, 10 seconds are enough.

Further, the unwashed porous membrane described above is immersed in an aqueous solution containing a good solvent for the polyamide-imide resin constituting the porous membrane B in an amount of 1 to 20% by weight, more preferably 5 to 15% by weight, and the washing step using pure water and the drying step using hot air at 100°C or lower are conducted, whereby a final battery separator can be obtained. According to this method, the resin finely enters deep into the pores of the polyolefin porous membrane A, and good electrolyte permeability can be provided and the rate of air permeability increase can be reduced.

For the washing in the membrane formation described above, common methods such as warming, ultrasonic irradiation, and bubbling can be used. Further, to keep the concentration in each bath constant and increase washing efficiency, removing the solution in the porous membrane between the baths is effective. Specific examples include extruding the solution in the porous layer with air or inert gas, squeezing out the solution in the membrane physically with a guide roll, and the like.

The battery separator of the present invention is desirably stored dry, but when it is difficult to store it absolutely dry, it is preferable to perform a vacuum drying treatment at 100°C or lower immediately before use.

The battery separator of the present invention can be used as a separator for batteries such as secondary batteries such as nickel-hydrogen batteries, nickel-cadmium batteries, nickel-zinc batteries, silver-zinc batteries, lithium ion secondary batteries, and lithium polymer secondary batteries, and is preferably used particularly as a separator for lithium ion secondary batteries.

EXAMPLES

The present invention will now be described in detail by way of example, but the present invention is not limited to the examples. The measurements in the examples were determined by the following methods.

(1) Measurement of absT$_{(1720)}$

For battery separators obtained in Examples and Comparative Examples, a porous membrane B was completely peeled off a porous membrane A with adhesive tape to prepare a sample. The sample prepared was examined for its infrared absorption spectrum by the transmission method under the following conditions. Also for an uncoated porous membrane A used as a blank sample, its infrared absorption spectrum was measured in a similar manner. The absorbance at or near 1,720 cm$^{-1}$ (absT$_{(1720)}$) derived from a polyamide-imide resin component was determined by determining the value of an absorption peak height having an absorption maximum in the area within 1,720 $\pm$ 15 cm$^{-1}$ and converting the value to an absorbance per 10 $\mu$m thickness of the porous membrane A.

The line between tails on both sides of the maximum absorption peak was used as a baseline. When there was large noise, smoothing was performed. All the blank samples (uncoated porous membrane A) were confirmed in advance not to have an absorption having a maximum in the above area.

[Measurement conditions]

Apparatus: Fourier transform infrared spectrophotometer FT-720 (manufactured by HORIBA, Ltd.)
Detector: DLATGS
Resolution: 4 cm$^{-1}$
Accumulations: 100 times

(2) Measurement of absR$_{(1720)}$

For battery separators obtained in Examples and Comparative Examples, the uncoated surface (the surface of a porous membrane A opposite to the surface coated with a porous membrane B) was examined for its infrared absorption spectrum using the reflection method. The infrared absorption spectrum was obtained using the same apparatus and measuring method as used in (1) Measurement of $absT_{(1720)}$ above except the surface to be measured. The absorbance at or near 1720 cm$^{-1}$ ($absR_{(1720)}$) derived from a polyamide-imide resin component was determined from the value of an absorption peak height having an absorption maximum in the area within $1,720 \pm 15$ cm$^{-1}$.

(3) Thickness

The thicknesses of a porous membrane A and a battery separator were measured using a contact thickness meter (M-30, digital micrometer manufactured by Sony Manufacturing Systems Corporation). The thickness of a porous membrane A was determined based on a sample obtained by peeling a porous membrane B off a battery separator. The thickness of a porous membrane B was determined from a difference between the thickness of a battery separator and the thickness of a porous membrane A.

(4) Porosity

A 10 cm square sample was provided, and its sample volume (cm$^3$) and mass (g) were measured; a porosity (%) was calculated from the results obtained using the following equation.

[0081]

$$\text{Porosity} = (1 - \text{mass}/(\text{resin density} \times \text{sample volume})) \times 100$$

The sample volume (cm$^3$) is determined by 10 cm $\times$ 10 cm $\times$ thickness (cm).

(5) Adhesion (peeling strength) of porous membrane B

Adhesive tape (available from NICHIBAN CO., LTD., No. 405; 24 mm wide) was applied to the porous membrane B surface of battery separators obtained in Examples and Comparative Examples, and the separator was cut to 24 mm in width and 150 mm in length to prepare a test sample. A peeling strength at the interface between a porous membrane A and a porous membrane B was measured by the peeling method (peel rate: 500 mm/min, T-peel) under the conditions of 23°C and 50% RH using a tensile tester ("Tensilon RTM-100" manufactured by A & D Company, Limited). Measurements were made continuously over time within 100 mm from the start to the end of the measurements, and an average value of the measurements was calculated and converted to a value per 25 mm width, which was used as a peeling strength.
At the peeling interface described above, the porous membrane B may be peeled off not completely to remain on the porous membrane A, but also in this case a value was calculated as a peeling strength at the interface between the porous membrane A and the porous membrane B.

(6) Rate of air resistance increase

Using a Gurley densometer type B manufactured by TESTER SANGYO CO., LTD., a battery separator or a porous membrane A was fixed between a clamping plate and an adapter plate such that wrinkling did not occur, and an air resistance was measured in accordance with JIS P 8117. Measurements were made at arbitrary three points, and the average value was used as an air resistance. An air resistance of the porous membrane A alone and an air resistance of the battery separator in Examples and Comparative Examples were measured, and the rate of air resistance increase was determined by the following equation.

$$\text{Rate of air resistance increase (\%)} = (\text{air resistance of battery separator}/\text{air resistance of porous membrane A alone}) \times 100$$

(7) Logarithmic viscosity

A solution obtained by dissolving 0.5 g of a polyamide-imide resin in 100 mL of NMP was measured at 25°C using an Ubbelohde viscosity tube.

(8) Glass transition temperature

A polyamide-imide resin solution or a resin solution obtained by dipping a battery separator in a good solvent to dissolve only a polyamide-imide resin was applied at an appropriate gap using an applicator to a PET film (E5001 available from TOYOBO CO., LTD.) or a polypropylene film (PYLEN-OT (registered trademark) available from TOYOBO CO., LTD.), predried at 120°C for 10 minutes, and then peeled. The film obtained was fixed to a metal frame of an appropriate size with heat resistant adhesive tape, and, in such a state, further dried under vacuum at 200°C for 12 hours to obtain a dry film. A test piece 4 mm wide × 21 mm long was cut out from the dry film obtained, and using a dynamic viscoelasticity measuring apparatus (DVA-220 manufactured by IT Keisoku Seigyo Co., Ltd.) at a measuring length of 15 mm, a storage elastic modulus (E') was measured in the range from room temperature to 450°C under the conditions of 110 Hz and a temperature rise rate of 4°C/min. At an inflection point of the storage elastic modulus (E') at this time, the temperature at the intersection of an extended baseline at or lower than a glass transition temperature and a tangent line showing a maximum slope at or higher than the inflection point was defined as a glass transition temperature.

(9) Average pore size

A test piece was fixed onto a cell for measurement using double-sided tape. Platinum or gold was vacuum-deposited for several minutes, and SEM observation was performed at 20,000X magnification. Arbitrary 20 points on an image obtained by SEM measurement were selected, and the average value of pore sizes at the 20 points was defined as an average pore size of the test piece.

(10) Average diameter of particles

Using an average diameter laser diffraction/scattering particle size distribution analyzer (Microtrac HRA manufactured by Leeds & Northrup Co.), ethylene glycol slurry of particles is added into ion exchanged water to an appropriate concentration to measure the particle size distribution. A cumulative curve was determined taking the total volume of the means of the particles as 100%, and the particle diameter at a point where the cumulative curve reaches 50% was defined as an average diameter ($\mu$m).

(11) Surface energy of polyamide-imide resin

For samples prepared by applying the polyamide-imide resin used in Examples and Comparative Examples to a glass plate and drying it to solidify, a contact angle between distilled water and methylene iodide was determined using a contact angle meter (DM-701, manufactured by Kyowa Interface Science Co., LTD.), and a surface energy of the samples was determined by the following equation.

$$\text{Surface energy of polyamide-imide resin } (\gamma_s) = \gamma_{sd} + \gamma_{sh}$$

wherein $\gamma_{sd}$ and $\gamma_{sh}$ are a dispersive component and a polar component of the surface energy of a sample, respectively, and can be determined by the following equation.

$$\gamma_{sd} = [4.04 \times (1 + \cos\theta_2) - 0.92 \times (1 + \cos\theta_1)]^2$$

$$\gamma_{sh} = [5.70 \times (1 + \cos\theta_1) - 2.64 \times (1 + \cos\theta_2)]^2$$

($\theta_1$ is a contact angle of distilled water, and $\theta_2$ is a contact angle of methylene iodide)

(12) Electrolyte permeability

White paper (PPC type H (available from ITOCHU PULP & CORPORATION)) is placed on a horizontally-disposed smooth glass plate, and a battery separator obtained in Examples or Comparative Examples was laminated thereon with the porous membrane B facing downward. Thereafter, 100 μL of a polycarbonate reagent was added dropwise from above (from the porous membrane A side) such that the drops were shaped into a substantial circle. At 3 seconds after the addition, the battery separator was peeled off the white paper, and the size (major axis) of a spot due to the polycarbonate reagent permeated into the white paper was read. This procedure was repeated three times, and an average value ($B_L$) was calculated. Also for the porous membrane A alone, measurements were made similarly ($A_L$). Electrolyte permeability (L) was determined from $B_L$ - $A_L$. Higher values mean more excellent electrolyte permeability.

[Evaluation]

$$L \geq 5 \text{ mm} \qquad \text{excellent}$$

$$5 \text{ mm} > L \geq 3 \text{ mm} \qquad \text{good}$$

$$3 \text{ mm} > L \geq 0 \text{ mm} \qquad \text{bad}$$

(13) Evaluation of curling property (warpage)

Battery separators obtained in Examples and Comparative Examples were cut to a size of 100 mm wide × 300 mm long. Static electricity was removed thoroughly with an antistatic brush, and then this sample was placed on a horizontally-disposed glass plate with the porous membrane B facing upward. Thereafter, both widthwise edges were fixed by 10 mm. Lift heights at both lengthwise edges were measured, and an average value was determined.

(Example 1)

[Synthesis of polyamide-imide resin]

Into a four-necked flask equipped with a thermometer, a cooling tube, and a nitrogen gas introduction tube, 1 mol of trimellitic acid anhydride (TMA), 0.8 mol of o-tolidine diisocyanate (TODI), 0.2 mol of 2,4-tolylene diisocyanate (TDI), and 0.01 mol of potassium fluoride were loaded together with *N*-methyl-2-pyrrolidone to a solids concentration of 20% by weight and stirred at 100°C for 5 hours, and then the resulting mixture was diluted with *N*-methyl-2-pyrrolidone to a solids concentration of 14% by weight to synthesize a polyamide-imide resin solution (A). The polyamide-imide resin obtained had a logarithmic viscosity of 1.35 dL/g, a surface energy of 42 mN/m, and a glass transition temperature of 320°C.

Subsequently, the polyamide-imide resin solution (A), alumina particles having an average diameter of 0.5 μm, and *N*-methyl-2-pyrrolidone were mixed at a weight ratio of 16:20:64, and the resulting mixture was placed into a polypropylene container together with zirconium oxide beads (trade name "Torayceram" (registered trademark) beads available from TORAY INDUSTRIES, INC., diameter: 0.5 mm) and dispersed for 6 hours using a paint shaker (manufactured by Toyo Seiki Seisaku-Sho, Ltd.). The dispersion was then filtered through a filter with a filtration limit of 5 μm to prepare a varnish (a). The polyamide-imide resin concentration in solution components was 2.8%; the weight ratio of the polyamide-imide resin (solid component) to the particles was 10:90; and the moisture content was 0.2% by weight.

The varnish (a) was applied to a porous membrane A (polyethylene porous film, thickness: 16 μm, porosity: 38%, average pore size: 0.15 μm, air resistance: 280 sec/100 cc Air) by blade coating. The coated membrane was passed through a humidity-controlled zone at a temperature of 25°C and an absolute humidity of 9.2 g/m³ for 20 seconds, immersed in an aqueous solution containing 5% by weight of *N*-methyl-2-pyrrolidone for 10 seconds to form a porous membrane B, and then washed with pure water. Finally, the washed membrane was dried by being passed through a hot-air drying furnace at 70°C to obtain a battery separator having a final thickness of 18.5 μm.

(Example 2)

A battery separator was obtained in the same manner as in Example 1 except that the mixing ratio of the polyamide-imide resin solution (A) to alumina particles to *N*-methyl-2-pyrrolidone was 19:23:58.

The concentration of the polyamide-imide resin in solution components was 3.5%, and the weight ratio of the polyamide-imide resin (solid component) to the particles was 10:90.

(Example 3)

A battery separator was obtained in the same manner as in Example 1 except that the mixing ratio of the polyamide-imide resin solution (A) to alumina particles to *N*-methyl-2-pyrrolidone was 12:16:72.

The concentration of the polyamide-imide resin in solution components was 2.0%, and the weight ratio of the polyamide-imide resin (solid component) to the particles was 10:90.

(Example 4)

A battery separator was obtained in the same manner as in Example 1 except that titanium oxide particles (available from Titan Kogyo, Ltd., trade name "KR-380", average particle size: 0.38 μm) were substituted for alumina particles.

(Example 5)

A battery separator was obtained in the same manner as in Example 1 except that spherical silica particles (available from SAKAI CHEMICAL INDUSTRY CO., LTD., average particle size: 1.0 μm) were substituted for alumina particles.

(Example 6)

A battery separator was obtained in the same manner as in Example 1 except that polymethyl methacrylate cross-linked particles ("Epostar" (registered trademark) MA, type 1002, available from NIPPON SHOKUBAI CO., LTD., average particle size: 2.5 μm) were substituted for alumina particles.

(Example 7)

Into a four-necked flask equipped with a thermometer, a cooling tube, and a nitrogen gas introduction tube, 1 mol of trimellitic acid anhydride (TMA), 0.60 mol of o-tolidine diisocyanate (TODI), 0.40 mol of diphenylmethane -4,4'-diisocyanate (MDI), and 0.01 mol of potassium fluoride were loaded together with *N*-methyl-2-pyrrolidone to a solids concentration of 20% and stirred at 100°C for 5 hours, and then the resulting mixture was diluted with *N*-methyl-2-pyrrolidone to a solids concentration of 14% to synthesize a polyamide-imide resin solution (B). The polyamide-imide resin obtained had a logarithmic viscosity of 0.85 dL/g, a glass transition temperature of 308°C, and a surface energy of 40 mN/m. A battery separator was obtained in the same manner as in Example 1 except that a varnish (b) prepared using the polyamide-imide resin solution (B) in place of the polyamide-imide resin solution (A) was used.

(Example 8)

A battery separator was obtained in the same manner as in Example 1 except that a polyethylene porous film having a thickness of 20 μm, a porosity of 45%, an average pore size of 0.17 μm, and an average air resistance of 240 sec/100ccAir was used as the porous membrane A.

(Example 9)

A battery separator was obtained in the same manner as in Example 1 except that the mixing ratio of the polyamide-imide resin solution (A) to alumina particles to *N*-methyl-2-pyrrolidone was 12:38:50.

The concentration of the polyamide-imide resin in solution components was 2.7%, and the weight ratio of the polyamide-imide resin (solid component) to the particles was 4:96.

(Example 10)

A battery separator was obtained in the same manner as in Example 1 except that the mixing ratio of the polyamide-imide resin solution (A) to alumina particles to *N*-methyl-2-pyrrolidone was 17:11:72.

The concentration of the polyamide-imide resin in solution components was 2.7%, and the weight ratio of the polyamide-imide resin (solid component) to the particles was 18:82.

(Example 11)

A battery separator was obtained in the same manner as in Example 1 except that the absolute humidity in the humidity-controlled zone was changed from 9.2 $g/m^3$ to 5.2 $g/m^3$.

(Example 12)

A battery separator was obtained in the same manner as in Example 1 except that the amount of the varnish (a) applied was adjusted to a final thickness of 19.5 $\mu$m.

(Example 13)

A battery separator was obtained in the same manner as in Example 1 except that the amount of the varnish (a) applied was adjusted to a final thickness of 14.5 $\mu$m.

(Comparative Example 1)

A battery separator was obtained in the same manner as in Example 1 except that the mixing ratio of the polyamide-imide resin solution (A) to alumina particles to *N*-methyl-2-pyrrolidone was 4:5:91.

The concentration of the polyamide-imide resin in solution components was 0.6%, and the weight ratio of the polyamide-imide resin (solid component) to the particles was 10:90.

(Comparative Example 2)

A battery separator was obtained in the same manner as in Example 1 except that the mixing ratio of the polyamide-imide resin solution (A) to alumina particles to *N*-methyl-2-pyrrolidone was 22:27:51.

The concentration of the polyamide-imide resin in solution components was 4.2%, and the weight ratio of the polyamide-imide resin (solid component) to the particles was 10:90.

(Comparative Example 3)

A battery separator was obtained in the same manner as in Example 1 except that the mixing ratio of the polyamide-imide resin solution (A) to *N*-methyl-2-pyrrolidone was 20:80 and alumina particles were not added.

The concentration of the polyamide-imide resin in solution components was 2.8%.

(Comparative Example 4)

A battery separator was obtained in the same manner as in Example 1 except that the absolute humidity in the humidity-controlled zone was changed from 9.2 $g/m^3$ to 18.0 $g/m^3$.

(Comparative Example 5)

A battery separator was obtained in the same manner as in Example 1 except that alumina impalpable powder with an average diameter of 13 nm (Aerosil Aluminum Oxide C: available from Nippon Aerosil Co., Ltd.) was substituted for the alumina particles used in Example 1.

(Comparative Example 6)

A battery separator was obtained in the same manner as in Example 1 except that polyvinylidene fluoride (available from KUREHA CORPORATION, trade name: KFpolymer#1120 (polyvinylidene fluoride 12%, N-methylpyrrolidone solution) was substituted for the polyamide-imide resin solution (A) and the mixing ratio of polyvinylidene fluoride to alumina particles to *N*-methyl-2-pyrrolidone was 18:20:62.

The polyamide-imide resin in solution components was 2.7%; the weight ratio of the polyamide-imide resin (solid component) to the particles was 10:90; and the surface energy of the polyvinylidene fluoride resin was 25 mN/m.

(Comparative Example 7)

The varnish (a) used in Example 1 was applied to the corona-treated surface of a polyethylene terephthalate resin film having a thickness of 50 $\mu$m by die coating, and the coated film was passed through a humidity-controlled zone at an absolute humidity of 9.2 g/m$^3$ for 13 seconds to form a membrane containing a polyamide-imide resin. After 2 seconds, the same porous membrane A as in Example 1 was laminated on the membrane containing a polyamide-imide resin, and the laminated membrane was immersed in an aqueous solution containing 5% by weight of *N*-methyl-2-pyrrolidone for 10 seconds, washed with pure water, and then dried by being passed through a hot-air drying furnace at 70°C. Finally, the polyethylene terephthalate resin film was peeled off. A battery separator having a final thickness of 18.5 $\mu$m was obtained.

(Comparative Example 8)

A battery separator was obtained in the same manner as in Example 1 except that the mixing ratio of the polyamide-imide resin solution (A) to alumina particles to *N*-methyl-2-pyrrolidone was 20:4:76.

The concentration of the polyamide-imide resin in solution components was 2.9%, and the weight ratio of the polyamide-imide resin (solid component) to the particles was 41:59.

Table 1 shows production conditions for the battery separators of Examples 1 to 13 and Comparative Examples 1 to 8, and properties of the porous membrane A and the battery separators.

[Table 1]

| | Resin type | Viscosity of heat resistance resin dUg | Surface energy (mN/m) | Resin concentration (%) | Partcle type | Average particle size (μm) | Ratio of particle | Humidifying condition (g/m$^3$) | absT$_{(1720)}$ | absR$_{(1720)}$ | Rate of air resistance increase | Thickness of battery separator (μm) | Electrolyte permeability (mm) | Peel strength (N/25mm) | Curling (mm) |
|---|---|---|---|---|---|---|---|---|---|---|---|---|---|---|---|
| Example 1 | PAI | 1.35 | 42 | 2.8% | Alumina | 0.50 | 90% | 9.2 | 0.008 | 0.002 | 110% | 18.5 | good | 1.3 | 5 |
| Example 2 | PAI | 1.35 | 42 | 3.5% | Alumina | 0.50 | 90% | 9.2 | 0.015 | 0.004 | 118% | 18.5 | good | 2.4 | 7 |
| Example 3 | PAI | 1.35 | 42 | 2.0% | Alumina | 0.50 | 90% | 9.2 | 0.005 | 0.001 | 107% | 18.5 | good | 1.0 | 3 |
| Example 4 | PAI | 1.35 | 42 | 2.8% | Titania | 0.38 | 90% | 9.2 | 0.007 | 0.002 | 113% | 18.5 | good | 1.4 | 5 |
| Example 5 | PAI | 1.35 | 42 | 2.8% | Silica | 1.00 | 90% | 9.2 | 0.011 | 0.002 | 108% | 18.5 | good | 1.2 | 5 |
| Example 6 | PAI | 1.35 | 42 | 2.8% | Crosslinked organic particle | 2.50 | 90% | 9.2 | 0.013 | 0.003 | 108% | 18.5 | good | 1.6 | 5 |
| Example 7 | PAI | 0.85 | 40 | 2.8% | Alumina | 0.50 | 90% | 9.2 | 0.025 | 0.005 | 110% | 18.5 | good | 1.1 | 5 |
| Example 8 | PAI | 1.35 | 42 | 2.8% | Alumina | 0.50 | 90% | 9.2 | 0.020 | 0.004 | 108% | 18.5 | good | 1.2 | 5 |
| Example 9 | PAI | 1.35 | 42 | 2.7% | Alumina | 0.50 | 96% | 9.2 | 0.005 | 0.001 | 108% | 18.5 | good | 1.0 | 2 |
| Example 10 | PAI | 1.35 | 42 | 2.7% | Alumina | 0.50 | 82% | 9.2 | 0.012 | 0.004 | 119% | 18.5 | good | 2.0 | 8 |
| Example 11 | PAI | 1.35 | 42 | 2.8% | Alumina | 0.50 | 90% | 5.2 | 0.009 | 0.004 | 110% | 18.5 | excellent | 1.3 | 5 |
| Example 12 | PAI | 1.35 | 42 | 2.8% | Alumina | 0.50 | 90% | 9.2 | 0.011 | 0.004 | 110% | 19.5 | good | 1.5 | 7 |
| Example 13 | PAI | 1.35 | 42 | 2.8% | Alumina | 0.50 | 90% | 9.2 | 0.006 | 0.003 | 111% | 14.5 | good | 1.3 | 5 |
| Comparative Example 1 | PAI | 1.35 | 42 | 0.6% | Alumina | 0.50 | 90% | 9.2 | 0.004 | 0.000 | 104% | 18.5 | good | 0.3 | 4 |
| Comparative Example 2 | PAI | 1.35 | 42 | 4.2% | Alumina | 0.50 | 90% | 9.2 | 0.027 | 0.006 | 132% | 18.5 | good | 2.8 | 10 |
| Comparative Example 3 | PAI | 1.35 | 42 | 2.8% | - | - | 0% | 9.2 | 0.031 | 0.006 | 110% | 18.5 | good | 3.2 | 11 |

(continued)

| | Resin type | Viscosity of heat resistance resin dUg | Surface energy (mN/m) | Resin concentration (%) | Partcle type | Average particle size (μm) | Ratio of particle | Humidifying condition (g/m³) | $absT_{(1720)}$ | $absR_{(1720)}$ | Rate of air resistance increase | Thickness of battery separator (μm) | Electrolyte permeability (mm) | Peel strength (N/25mm) | Curling (mm) |
|---|---|---|---|---|---|---|---|---|---|---|---|---|---|---|---|
| Comparative Example 4 | PAI | 1.35 | 42 | 2.8% | Alumina | 0.50 | 90% | 18.0 | 0.005 | 0.000 | 106% | 18.5 | bad | 0.6 | 5 |
| Comparative Example 5 | PAI | 1.35 | 42 | 2.8% | Alumina | 0.013 | 90% | 9.2 | 0.005 | 0.004 | 127% | 18.5 | bad | 1.6 | 5 |
| Comparative Example 6 | PVDF | - | 25 | 2.7% | Alumina | 0.50 | 90% | 9.2 | 0.000 | 0.000 | 111% | 18.5 | bad | 1.3 | 5 |
| Comparative Example 7 | PAI | 1.35 | 42 | 2.8% | Alumina | 0.50 | 90% | 9.2 | 0.016 | 0.000 | 109% | 18.5 | good | 1.2 | 5 |
| Comparative Example 8 | PAI | 1.35 | 42 | 2.9% | Alumina | 0.50 | 59% | 9.2 | 0.080 | 0.002 | 109% | 18.5 | good | 1.2 | 10 |

INDUSTRIAL APPLICABILITY

The battery separator of the present invention has excellent heat resistance and processability (electrolyte permeability, low curling property) and is characterized in that the air resistance increase due to lamination of a heat resistant resin is extremely small, and it therefore can be very suitably used as a separator for lithium ion secondary batteries.

**Claims**

1. A battery separator comprising:

   a porous membrane A; and
   a porous membrane B laminated on the porous membrane A, the porous membrane A comprising a polyolefin resin, the porous membrane B comprising a polyamide-imide resin and inorganic particles or cross-linked polymer particles, wherein the particles are contained in an amount of 80% by weight to 97% by weight of the porous membrane B and have an average diameter that is not less than 1.5 times and less than 50 times the average pore size of the porous membrane A, and Inequality 1 and Inequality 2 are satisfied:

$$0.005 \leq \mathrm{absT}_{(1720)} \leq 0.030 \qquad \text{Inequality 1}$$

   $\mathrm{absT}_{(1720)}$: Absorbance of an absorption having a peak at or near 1,720 cm$^{-1}$ per 10 $\mu$m thickness of the porous membrane A, as measured by infrared spectroscopy (transmission method) after peeling the porous membrane B off the porous membrane A; and

$$0.001 \leq \mathrm{absR}_{(1720)} \leq 0.005 \qquad \text{Inequality 2}$$

   $\mathrm{absR}_{(1720)}$: Absorbance of a maximum peak at or near 1,720 cm$^{-1}$, as measured by infrared spectroscopy (reflection method) on the surface of the porous membrane A that is opposite to the porous membrane B.

2. The battery separator according to claim 1, wherein the inorganic particles are at least one selected from silica, titanium dioxide, and alumina.

3. The battery separator according to claim 1, wherein the cross-linked polymer particles are at least one selected from cross-linked polystyrene particles, cross-linked acrylic resin particles, and cross-linked methyl methacrylate particles.

4. A method of producing the battery separator according to any one of claims 1 to 3, comprising the following steps (i) and (ii):

   Step (i): Applying a coating solution (varnish) to the porous membrane A comprising a polyolefin resin, the coating solution comprising a polyamide-imide resin and inorganic particles or cross-linked polymer particles, wherein the concentration of the polyamide-imide resin in solution components is 1% by weight to 3.5% by weight, and then passing the coated porous membrane A through a humidity-controlled zone at an absolute humidity of 5 g/m$^3$ or more but less than 10 g/m$^3$ for 3 seconds or more but less than 30 seconds to form a polyamide-imide resin membrane on the porous membrane A; and
   Step (ii): Immersing a composite membrane obtained in the step (i), in which the membrane comprising the polyamide-imide resin is laminated, in a coagulation bath to convert the polyamide-imide resin membrane into a porous membrane B, followed by washing and drying, to obtain a battery separator.

**INTERNATIONAL SEARCH REPORT**

| International application No. |
| --- |
| PCT/JP2013/057610 |

**A. CLASSIFICATION OF SUBJECT MATTER**
*H01M2/16*(2006.01)i, *B32B27/32*(2006.01)i, *B32B27/34*(2006.01)i

According to International Patent Classification (IPC) or to both national classification and IPC

**B. FIELDS SEARCHED**

Minimum documentation searched (classification system followed by classification symbols)
H01M2/16, B32B27/32, B32B27/34

Documentation searched other than minimum documentation to the extent that such documents are included in the fields searched
Jitsuyo Shinan Koho        1922-1996    Jitsuyo Shinan Toroku Koho    1996-2013
Kokai Jitsuyo Shinan Koho   1971-2013    Toroku Jitsuyo Shinan Koho    1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2009/041395 A1 (Sanyo Electric Co., Ltd.), 02 April 2009 (02.04.2009), claims & US 2010/0255380 A1 | 1-4 |
| A | WO 2009/041394 A1 (Sanyo Electric Co., Ltd.), 02 April 2009 (02.04.2009), claims & JP 2009-87562 A    & US 2010/0233547 A1 | 1-4 |
| A | JP 2009-224097 A (Panasonic Corp.), 01 October 2009 (01.10.2009), claims (Family: none) | 1-4 |

[X] Further documents are listed in the continuation of Box C.    [ ] See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 02 May, 2013 (02.05.13) | 14 May, 2013 (14.05.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

| | INTERNATIONAL SEARCH REPORT | International application No.<br>PCT/JP2013/057610 |
|---|---|---|

C (Continuation).  DOCUMENTS CONSIDERED TO BE RELEVANT

| Category* | Citation of document, with indication, where appropriate, of the relevant passages | Relevant to claim No. |
|---|---|---|
| A | WO 2006/061936 A1  (Matsushita Electric Industrial Co., Ltd.), 15 June 2006 (15.06.2006), example 23 & JP 4933270 B2          & US 2008/0070107 A1 | 1-4 |
| A | JP 2005-281669 A  (Toyobo Co., Ltd.), 13 October 2005 (13.10.2005), claims (Family: none) | 1-4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3175730 B
- WO 2009041395 A
- WO 2009041394 A
- JP 2008524824W B
- JP 2008503049W B